# EUROPÄISCHE PATENTSCHRIFT

(11) **EP 2 846 966 B1**
(45) Veröffentlichungstag und Bekanntmachung des Hinweises auf die Patenterteilung: **14.12.2016**
(21) Anmeldenummer: 13731020.7
(22) Anmeldetag: 07.05.2013
(51) Int. Cl.: B23Q 1/26, B23Q 11/00, B23Q 23/00, B23Q 39/02, G05B 19/404

(54) **TRANSFERZENTRUM ZUR SPANENDEN BEARBEITUNG MINDESTENS EINES WERKSTÜCKS, MIT EINEM POSITIONSAUSGLEICHSSYSTEM**
TRANSFER CENTRE FOR MACHINING AT LEAST ONE WORKPIECE, WITH A POSITION COMPENSATION SYSTEM
CENTRE DE TRANSFERT DESTINÉ À USINER AU MOINS UNE PIÈCE PAR ENLÈVEMENT DE MATIÈRE, COMPRENANT UN SYSTÈME DE COMPENSATION DE POSITION

(30) Priorität: 07.05.2012 AT 5332012
(43) Veröffentlichungstag der Anmeldung: 18.03.2015
(73) Patentinhaber: ANGER MACHINING GmbH, 4050 Traun (AT)
(72) Erfinder: HAAS, Roland, A-4222 St. Georgen an der Gusen (AT); PERNKOPF, Friedrich, A-4040 Linz (AT)
(74) Vertreter: Jell, Friedrich
(86) Internationale Anmeldenummer: PCT/AT2013/050104
(87) Internationale Veröffentlichungsnummer: WO 2013/166539

(56) Entgegenhaltungen:
- WO-A1-2008/076054
- DE-U1-202010 008 979
- GB-A- 1 273 050

## Beschreibung

### Technisches Gebiet

Die Erfindung betrifft ein Transferzentrum zur spanenden Bearbeitung mindestens eines Werkstücks mit einem Maschinenrahmen, mit mehreren, bevorzugt ortsfest, im Maschinenrahmen, insbesondere in einem Bearbeitungskopf, angeordneten Bearbeitungsspindeln, mit einem Werkstückträger, an dem mindestens ein zu bearbeitendes Werkstück mittels je einer Spannvorrichtung angeordnet ist, und mit einem im Maschinenrahmen angeordneten Werkstückmanipulator, an dem der Werkstückträger angeflanscht ist und der mittels Antriebsmittel in zumindest einer Raumrichtung in Relation zum Maschinenrahmen beweglich ist.

### Stand der Technik

In einem bekannten Transferzentrum (EP2310166B1) sind die Bearbeitungsspindeln in einem Spindelkopf angeordnet, so dass die relative Position der einzelnen Bearbeitungsspindel zueinander, zum Werkstück und zum Maschinenrahmen festgelegt ist. Gegebenenfalls können manche Werkzeugspindeln zwischen einer zurückgezogenen Ruhelage, in eine ausgefahrene Arbeitslage verfahren werden. Eine Positionsanpassung einer einzelnen Bearbeitungsspindel ist nicht vorgesehen. In einem Transferzentrum wird das zu bearbeitende Werkstück zu den Werkzeugen geführt, ferner ist ein Spindelkopf für die Durchführung einer großen Anzahl gleichartiger Bearbeitungen ausgelegt, zumeist werden mehrere Bearbeitungen an verschiedenen Merkmalspositionen gleichzeitig ausgeführt. Daher wird das Genauigkeitserfordernis von der exakten Positionierung eines einzelnen Werkzeugs, zur exakten Ausrichtung des Werkstücks in Bezug zu einer Mehrzahl von Werk-zeugen verlagert. Eine Positionsabweichung kann sich bspw. durch das Gewicht des Werkstückträgers und der bzw. des darauf aufgespannten Werkstücks ergeben. Auch führt die Belastung durch die Bearbeitung zu einer Kraftwirkung auf den Werkstückträger und, abhängig vom Abstand zur Einspannung bzw. Halterung, zu einem entsprechenden Hebelarm. Bei bekannten Transferzentren wird der Maschinenrahmen bzw. das Maschinengestell entsprechend massiv ausgeführt, was sich in erhöhten Produktionskosten auswirkt. Ein massiver Werkstückhalter, inklusive der Vorrichtung zu dessen Verfahren, hat aber einen weiteren ganz entscheidenden Nachteil: Da die Werkstücke möglichst schnell zwischen den Bearbeitungspositionen verfahren werden müssen, ist dafür bei einem massiven Aufbau wesentlich mehr Antriebsenergie erforderlich um die Massen zu beschleunigen und wieder abzubremsen. Auch können diese Bewegungen dazu führen, dass das gesamte Transferzentrum Mikro-Schwingungen ausführt, was sich negativ auf die erzielbaren Genauigkeiten sowie auch Oberflächengüte auswirkt. Da die Relativposition der Werkzeuge zueinander nicht veränderbar ist, muss sichergestellt werden, dass das Werkstück für alle Bearbeitungsschritte bzw. Bearbeitungsmerkmale korrekt ausgerichtet ist. Dies gewinnt speziell bei einer gleichzeitigen Bearbeitung mehrere Werkstücke besonders an Bedeutung.

Für andere Werkzeugmaschinen sind aus dem Stand der Technik Ausführungen bekannt, bei denen die Ausrichtung zwischen einem Werkstück und einer Bearbeitungsspindel korrigiert wird. So beschreibt die DE3708412A1 eine Vorrichtung zur Niveauregulierung eines Werkstückträgers. Hierfür ist der Werkstückträger an einem Ende schwenkbar gelagert und an seinem anderen Ende mit steuerbaren Druckelementen versehen. Damit kann das Werkstück in Relation zum Werkzeug immer auf der vorgegebenen Nulllage eingeregelt werden. Für die Problematik bei einem Transferzentrum mit einem Mehrspindel-Bearbeitungskopf offenbart die DE3708412A1 keine Lösung, da bei solch einem Mehrspindel-Bearbeitungskopf mehrere Bearbeitungen gleichzeitig ausgeführt und hierfür eine schwenkbare Lagerung eines Werkstückträgers keine Verbesserung in der Genauigkeit solch einer parallelen Bearbeitung bringt.

Aus der DE202010008979U1 ist ein Stand der Technik nach dem Oberbegriff des Anspruchs 1 bekannt.

### Darstellung der Erfindung

Die Erfindung hat sich daher die Aufgabe gestellt, ein Transferzentrum der eingangs geschilderten Art derart zu konstruktiv zu verändern, dass damit stets eine hohe Positionsgenauigkeit von einer Mehrzahl von gleichzeitigen Bearbeitungspositionen gewährleistet werden kann, auch dann wenn mehr als ein Werkstück gleichzeitig bearbeitet wird. Zudem soll ein kompakter Aufbau des Transferzentrums möglich werden.

Die Erfindung löst die gestellte Aufgabe dadurch, dass das Transferzentrum zum Ausgleich einer Abweichung zwischen Ist- zur Sollposition des Werkstücks bzw. der Werkstücke ein Positionsausgleichssystem mit zumindest zwei, zwischen dem Werkstück oder den Werkstücken und dem Maschinenrahmen angeordneten Druckelementen aufweist, deren Wirkrichtungen einen Winkel zueinander einschließen.

Weist das Transferzentrum ein Positionsausgleichssystem mit zumindest zwei, zwischen dem Werkstück oder den Werkstücken und dem Maschinenrahmen angeordneten Druckelementen auf, deren Wirkrichtungen einen Winkel zueinander einschließen, kann auf elegante Weise ein Ausgleich einer Abweichung zwischen Ist-zur Sollposition des Werkstücks bzw. der Werkstücke geschaffen werden, was auch bei einer parallelen Bearbeitung mit einem Mehrspindel-Bearbeitungskopf für höchste Positionsgenauigkeit sorgen kann. Der Winkel zwischen den beiden Druckelementen, kann nämlich ermöglichen, dass ein Positionsausgleich zwischen der Ist-und Sollposition zumindest in zwei Richtungen möglich wird. Jeglicher Winkel ist hierbei vorstellbar, um den gewünschten Positionsausgleich des Werkstücks, der Werkstücke bzw. der Werkstücke zueinander für eine genaue parallele Bearbeitung im Transferzentrum schaffen zu können. Neben einer Positionsabweichung die durch eine Fehlausrichtung des Werkstücks bzw. der Werkstücke in Relation zum Werkstückträger hervorgerufen wird, ist auch eine Positionsabweichung durch die Ausrichtung des Werkstückmanipulators vorstellbar. Erfindungsgemäß muss zudem der Werkstückmanipulator, der in zumindest einer Raumrichtung in Relation zum Maschinenrahmen beweglich ist, aufgrund vorhandener Ungenauigkeiten seiner Antriebsmittel oder Führungsmittel bei der Positionierungenauigkeit der Werkstücke nicht berücksichtigt werden. Auch kann es durch das Gewicht des Werkstückträgers bzw. des darauf aufgespannten Werkstücks, zu einer mechanischen Deformation des Werkstückträgers und/oder des Maschinenrahmens kommen, was durch das Positionsausgleichssystems ausgeglichen werden kann.

Im Allgemeinen wird erwähnt, dass unter einem Winkel nicht nur ein Schnittwinkel der Wirkrichtungen zu verstehen ist. Die Wirkrichtungen können auch windschiefe Graden darstellen, entscheidend ist jedoch, dass die Wirkrichtungen linear unabhängig verlaufen, um eine zweiachsige Verstellung zu ermöglichen. Im Allgemeinen wird erwähnt, dass das Druckelement bzw. die Druckelemente einen Stellweg von bis zu +/- 0,5mm aufweist können, weil damit ein von Werkzeugmaschinen bekannter Großteil der ggf. auftretenden Positionsabweichungen korrigiert werden kann.

Nach einer Weiterbildung ist vorgesehen, dass das Druckelement durch ein hydraulisches Druckelement gebildet ist. Flüssigkeiten sind weitgehend inkompressibel und können somit einerseits einen sehr großen Druck übertragen, der vom Druckelement in eine entsprechende Kraftwirkung umgesetzt wird, andererseits kann durch entsprechend stabile Aufrechterhaltung dieses Drucks auch eine entsprechende Haltewirkung erreicht werden. Besonders als Druckdose ausgebildete Druckelemente bieten sich aufgrund deren mechanischen Robustheit und Steifigkeit für den erfindungsgemäßen Anwendungsfall an. Zudem kann eine Druckdose auch als Führung verwendet werden, so dass diese gleichzeitig als Aktor und Lager dienen können.

Nach einer Weiterbildung ist vorgesehen, dass die Wirkrichtungen der beiden Druckelemente in einer Ebene liegen. Diese Ebene kann beispielsweise parallel zu einer Auflagefläche am Werkstückträger liegen. Damit kann eine Relativpositionierung des Werkstücks bzw. der Werkstücke oder dessen Spannnest bzw. deren Spannnester auf gegenüber Werkstückträger bzw. eine Relativbewegung zwischen den Werkstücken ermöglich werden. Es kann ferner zusätzlich oder alternativ vorgesehen sein, dass der Winkel 90 Grad beträgt.

Die Spannvorrichtung, mit welcher das Werkstück am Werkstückträger aufgespannt wird, kann als Universalteil ausgebildet sein, um möglichst für eine Vielzahl unterschiedlicher Einsatzfälle ausgebildet zu sein. Vorstellbar sind auch Nullpunkt-Spannsysteme etc. Um nun eine Positionierung des Werkstücks zu ermöglichen, ist gemäß einer Weiterbildung vorgesehen, dass die Druckelemente zwischen der Spannvorrichtung oder den Spannvorrichtungen und dem Werkstückträger angeordnet sind. Im ersten Fall lassen sich auch vorhandene Spannvorrichtungen weiter verwenden, bspw. in dem das Druckelement zusätzlich mit eingespannt wird. Im letzteren Fall ist an der Spannvorrichtung keine konstruktive Änderung erkennbar, was ein Aufspannen von Werkstücken unverändert zulassen kann.

Greifen mindestens zwei Druckelemente mit einem Winkel zwischen deren Wirkrichtungen je an ein Spannnest einer Spannvorrichtungen an, kann eine zweiachsige Bewegbarkeit der Spannvorrichtung am Werkstückhalter erreicht werden. Das eingespannte Werkstück kann dadurch besonders genau ausgerichtet werden. Diese Kraftwirkung kann durch mehrere Druckelemente mit gleicher Wirkrichtung erhöht werden bzw. kann damit der Stellweg vergrößert werden.

Es kann sich jedoch als ausreichend herausstellen, wenn an je ein Spannnest einer Spannvorrichtung ein Druckelement bzw. mehrere Druckelemente mit gleicher Wirkrichtung angreift bzw. angreifen, um unter konstruktiver Vereinfachung die diesbezüglich eingespannten Werkstücke für eine parallele Bearbeitung ausrichten zu können.

Zudem kann damit konstruktiv ein Ausgleich einer Abweichung zwischen Ist- zur Sollposition zweier Werkstücke relativ zueinander ermöglich werden, in dem deren Spannvorrichtung je eine andere Wirkrichtung zugeordnet ist.

Eine positionsgenaue Lageeinstellung des Werkstücks bzw. der Werkstücke kann erreicht werden, wenn die Spannvorrichtung über die Druckelemente am Werkstückträger befestigt ist. Durch solch eine Aufhängung der Spannvorrichtung bzw. seines Spannnests, kann nämlich eine vergleichsweise hohe Beweglichkeit geschaffen werden. Zudem ist eine derartige konstruktive Ausführung vergleichsweise standfest auszubilden, und bedarf weiter keiner konstruktiven Veränderung an bekannten Spanneinrichtungen.

Eine Weiterbildung besteht ferner darin, dass mindestens zwei Druckelemente in der Spannvorrichtung integriert angeordnet sind. Somit wird eine individuell ausgebildete Spannvorrichtung gebildet, welche spezifisch auf die Erfordernisse der jeweiligen Aufspannposition bzw. Aufspannerfordernisse angepasst ist.

Reicht bspw. die Stellkraft eines Druckelements nicht aus, um den Positionsausgleich unter Einsatzbedingungen durchzuführen, können gemäß einer Weiterbildung auf selber Wirkrichtung, zwei Druckelemente gegenüberliegend angeordnet sein. Dies kann beispielsweise bei einfach wirkenden hydraulischen Druckelementen notwendig sein. In einer Ausführung befindet sich das Werkstück zwischen den beiden Druckelementen. Eine weitere mögliche Ausführung besteht darin, dass die beiden Druckelemente aneinander angrenzen. Durch diese beiden Ausführungsvarianten kann eine Steigerung der aufbringbaren Kraft bzw. eine Verdopplung des erreichbaren Verstellwegs erreicht werden.

Ist zusätzlich mindestens ein Druckelement mit einer zu den anderen beiden Druckelementen linear unabhängigen, insbesondere parallelen, Wirkrichtung vorgesehen, kann nicht nur eine lineare Ausrichtung des Werkstücks sondern auch das Werkstück rotatorisch ausgerichtet werden. Durch diese erhöhte Beweglichkeit des Werkstücks kann die Positionsgenauigkeit des bzw. der Werkstücke erhöht und damit die Genauigkeit der Transferzentrums erhöht werden.

Ist der Werkstückmanipulator an einem offenen Basisrahmen über einen erster und zweiter Schlitten beweglich gelagert, wobei der erste Schlitten relativ zum Basisrahmen längs zweier parallel ausgerichteten ersten Schienenführungen in einer ersten Richtung und der zweite Schlitten relativ zum ersten Schlitten längs zweier parallel ausgerichteten zweiten Schienenführungen in einer zweiten Richtung beweglich ist, kann diese konstruktive Ausführung genützt werden, die die Druckelemente zwischen dem Basisrahmen und dem ersten Schlitten und/oder zwischen dem ersten und zweiten Schlitten anzuordnen. Die Konstruktion des Transferzentrums kann dadurch vereinfacht werden. Denn einersetis soll der Werkstückmanipulator leicht sein, um eine hohe Verfahrgeschwindigkeit zu ermöglichen, andererseits soll der Manipulator auch mechanisch stabil sein, um das Gewicht des aufgespannten Werkstücks und durch die bei der Bearbeitung einwirkenden Kräfte aufnehmen zu können. Mit der erfindungsgemäßen Anordnung der Druckelemente können zudem auch die auftretenden Deformationen ausgeglichen werden. Durch den Verstellbereich der Druckelemente bei einem entsprechenden Kraftaufbringungsvermögen, können eventuell auch einzelne Komponenten des Werkstückmanipulators reduziert massiv ausgeführt werden. Gemäß den Konventionen in der Werkstückbearbeitung ist mit dieser anspruchsgemäßen Ausbildung eine Bewegung des Werkstückträgers in Y-Z-Richtung möglich.

Im Allgemeinen wird erwähnt, dass unter Schienenführung, beispielsweise eine Längsführung aus einer Schiene und einem Führungswagen verstanden werden kann. Gleichbedeutend können darunter aber auch Flachstabführung, Rundstabführung, Gleitführung, elektromagnetische Führung, hydrostatisch Führung verstandenen werden, wobei diese Aufzählung nicht abschließend zu sehen ist. Unter einer Schienenführung können damit all jene Führungssystem verstanden werden, die ein richtungsweisendes bzw. führendes Teil und ein, in diese Führung eingreifendes bzw. dieser folgendes Teil aufweisen.

Nach einer Weiterbildung liegen die Wirkrichtungen der beiden Druckelemente in einer Ebene, welche senkrecht zu einer Frontfläche des Basisrahmens ausgerichtet ist. Diese Ebene, zur Unterscheidung im Weiteren als Aufspannebene bezeichnet, entspricht in üblicher Weise auch jener Ebene, auf der das Werkstück angeordnet ist, wobei abhängig vom Werkstück und Werkstückhalter, diese Ebene auch eine gedachte Ebene sein kann. Mit dieser Weiterbildung ist nun sichergestellt, dass das am Werkstückträger aufgespannte und damit zumeist auch gestützte Werkstück, relativ zur Auflagefläche am Werkstückträger positioniert werden kann. Dies hat den Vorteil, dass die mechanische Stützfunktion des Werkstückträgers auch bei der Relativpositionierung des Werkstücks bzw. der Werkstücke erhalten bleibt.

Um eine ungestörte Relativbewegung der Schlitten gegeneinander und gegenüber dem Basisrahmen zu gewährleisten und dennoch den Positionsausgleich zuverlässig durchführen zu können, ist gemäß einer Weiterbildung die erste Schienenführung und/oder zweite Schienenführung aus einer Längsschiene und zumindest zwei Führungswägen gebildet, wobei ein Druckelement im Bereich eines Führungswagens angeordnet ist. Da die bevorzugte Abweichungsrichtung zumeist aus konstruktiven und belastungsdynamischen Überlegungen bekannt ist, kann durch Anordnen eines der beiden Druckelemente in einem Führungswagen ein Ausgleich der zu erwartenden Positionsabweichung durchgeführt werden.

Eine Weiterbildung besteht ferner darin, dass jeweils ein Druckelement im Bereich jedes der beiden Führungswägen angeordnet ist. Dadurch erhält man eine Erhöhung der Ausgleichsmöglichkeiten, da damit, bei einer 4-Punkt-Führung, der Versatz jedes Kontaktpunkts des Schlittens mit dem Führungsteil beeinflusst werden kann.

Es kann auch vorgesehen sein, dass der Werkstückmanipulator neben der Bewegung in Y-Z-Richtung auch eine Zustellbewegung in X-Richtung ausführen kann. Dazu ist im zweiten Schlitten ein relativ zum zweiten Schlitten verschiebbar gelagert Flanschträger, eine Pinole, vorhanden, an welchem der Werkstückträger angeflanscht ist. Nach einer Weiterbildung ist nun vorgesehen, dass die Druckelemente zwischen dem zweiten Schlitten und dem Flanschträger angeordnet sind. Beim Ausfahren des Flanschträgers kann es durch das Eigengewicht des Werkstückträgers und/oder durch das darauf aufgespannte Werkstück und die zusätzliche Belastung beim Bearbeiten zu einer Durchbiegung der Pinole kommen, was durch die anspruchsgemäße Ausbildung kompensiert werden kann. Die Wirkrichtungen der beiden Druckelemente liegen dabei in einer Ebene, welche parallel zu einer Frontfläche des Basisrahmens ausgerichtet ist - dies entspricht im Wesentlichen der Y-Z-Ebene.

### Kurze Beschreibung der Zeichnung

Zum besseren Verständnis der Erfindung wird diese anhand der nachfolgenden Figuren beispielsweise näher erläutert. Es zeigen jeweils in stark schematisch vereinfachter Darstellung:

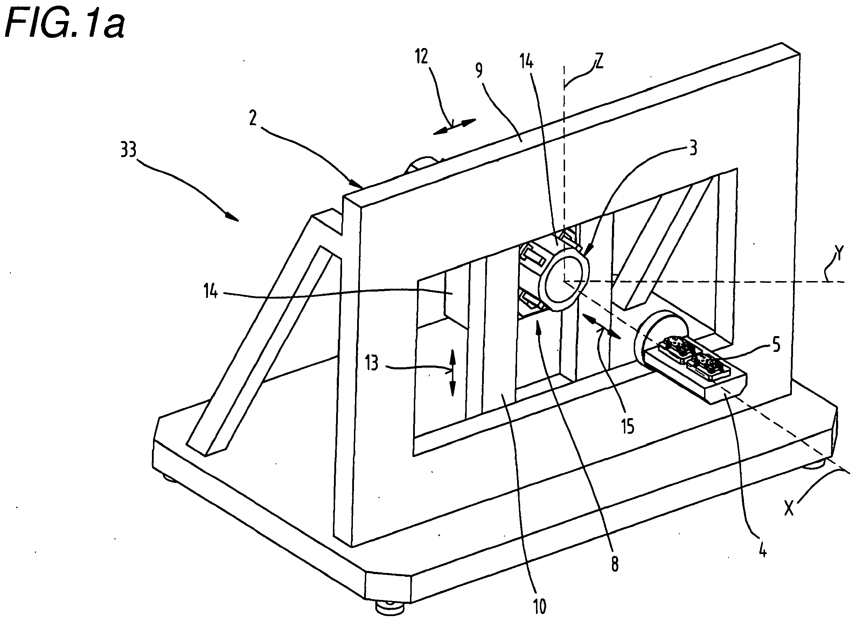

- Fig. 1a) bis f): eine Ausführung des gegenständlichen Positionsausgleichssystems bei der die Druckelemente im Bereich der Aufspannung des Werkstücks angeordnet sind.

### Weg zur Ausführung der Erfindung

Fig. 1a bis Fig. 1f zeigen eine Ausführung des gegenständlichen Positionsausgleichssystems 1 in einem Transferzentrum 33 zur spanenden Bearbeitung von Werkstücken 5. Dabei ist in einem Maschinenrahmen 2 ein Werkstückmanipulator 3 angeordnet, an welchem Werkstückmanipulator 3 ein Werkstückträger 4 angeflanscht ist. Auf dem Werkstückträger 4 sind die parallel zu bearbeitenden Werkstücke 5 mittels eigenen Spannvorrichtungen 6 aufgespannt, wobei durch das Aufspannen eine ortsfeste Fixierung der Werkstücke 5 erreicht wird, insbesondere werden die Werkstücke 5 damit am Werkstückträger 4 gehalten.

Zur Verdeutlichung der wesentlichen Komponenten des gegenständlichen Positionsausgleichssystems sind die weiteren Komponenten des Transferzentrums 33, insbesondere der Maschinenrahmen und der Bearbeitungskopf, nicht oder nur schematisiert dargestellt. Wesentlich für ein Transferzentrum 33 ist, dass die Werkstücke 5 zu den, in Relation zum Maschinenrahmen zumeist ortsfest angeordneten Werkzeugspindeln, geführt werden. Diese Aufgabe wird vom Werkstückmanipulator durchgeführt.

Der Werkstückmanipulator 3 ragt eventuell mit seinem Werkstückträger 4 durch den offenen Basisrahmen 9 des Maschinenrahmens 2. Diese Ausführungsform ist allen Ausführungsformen nach den Figuren gemeinsam. Mit dem Basisrahmen 9 sind ein erster Schlitten 10 und zweiter Schlitten 11 verbunden. Der erste Schlitten 10 ist dabei relativ zum Basisrahmen 9 in einer ersten Richtung 12 verschiebbar, der zweite Schlitten 11 ist relativ zum ersten Schlitten 10 in einer zweiten Richtung 13 verschiebbar. Die Verschiebung des ersten 10 und zweiten 11 Schlittens erfolgt mittels Antriebsmittels, welche zur Vereinfachung der Figuren nicht dargestellt sind.

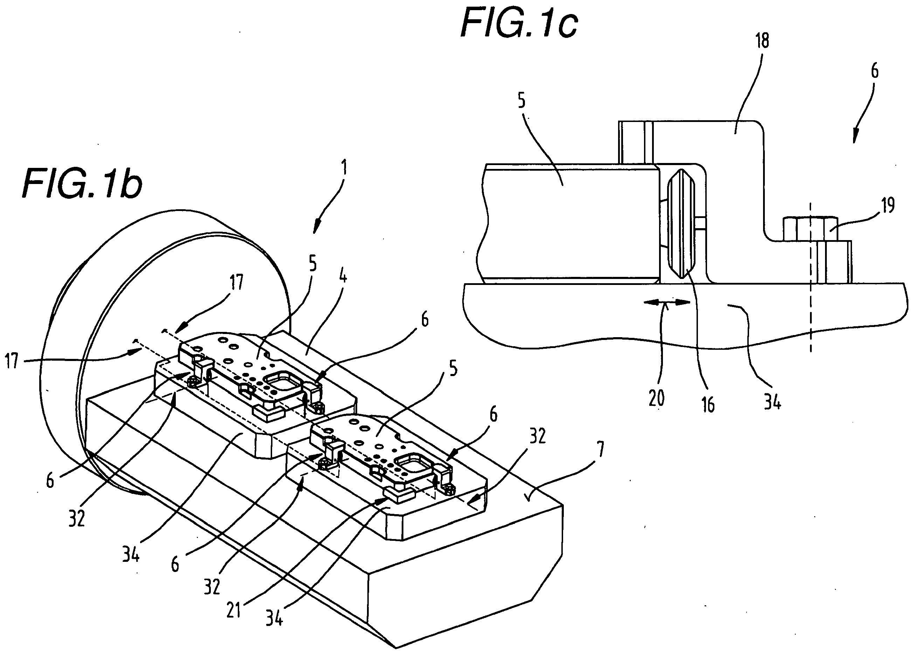

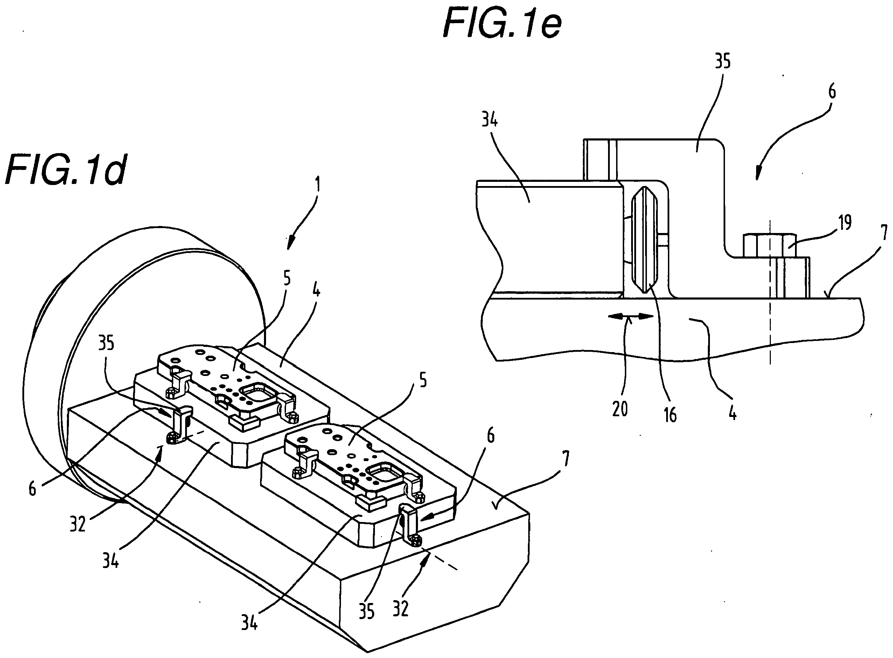

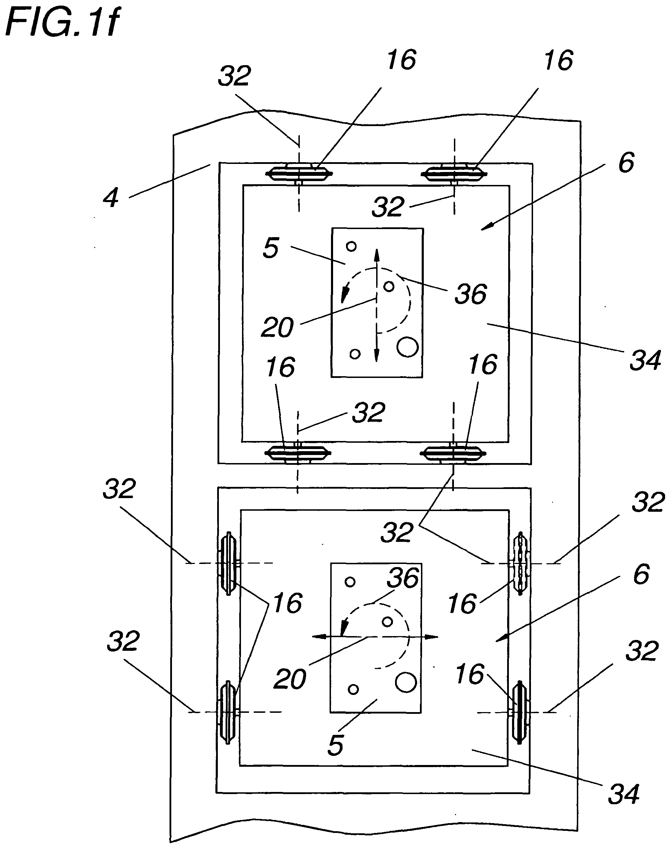

Der Werkstückträger 4 ist auf einem Flanschträger 14 angeflanscht, welcher Flanschträger 14 in der Aufnahmevorrichtung 8 gehalten aufgenommen ist. Zur Vereinfachung der Darstellung ist der Werkstückträger in Fig. 1 a vom Flanschträger abgesetzt dargestellt. Eine Weiterbildung kann auch darin bestehen, dass der Flanschträger 14 relativ zur Aufnahmevorrichtung 8 in eine dritte Richtung 15 bewegbar ist bzw. dass zusätzlich oder alternativ eine Verdrehung des Flanschträgers 4 um die dritte Richtung 15 möglich ist. Die zur Bewegung des Flanschträgers 14 erforderlichen Antriebsmittel sind in der Figur, ebenfalls aus Vereinfachungsgründen, wiederum nicht dargestellt.

Da es beim Aufspannen des Werkstückes 5 am Werkstückträger 4 zu einem Versatz zwischen einer Soll-Ausrichtungsposition und der Ist-Ausrichtungsposition kommen kann, ist vorgesehen, dass zwischen dem Werkstück 5 und dem Maschinenrahmen 2, zumindest zwei Druckelemente 16 angeordnet sind. Im der dargestellten Ausführungsvarianten sind die beiden Druckelemente im Bereich der Spannvorrichtung 6 angeordnet. Die Druckelemente 16 sind nun derart angeordnet, dass deren Wirkrichtungen 32 einen Winkel zueinander einschließen bzw. sind diese Wirkrichtungen 32 in vektorieller Sicht linear unabhängig.

Somit ist es möglich, ein aufgespanntes Werkstück 5 relativ zu seiner Aufspannposition bewegen zu können, und somit geringfügige Positionsabweichungen des Werkstücks 5 ausgleichen zu können. Dabei handelt es sich jedoch nur um geringfügige Positionsverstellungen, da das Werkstück 5 grundsätzlich genau ausgerichtet am Werkstückträger 4 angeordnet ist. Bei einer Weiterbildung eines Druckelements 16 ist vorgesehen, dass mit diesem eine Positionsanpassung von +/- 0,5 mm ermöglichen.

Insbesondere ist ein derartiger Positionsausgleich dann von Vorteil, wenn am Werkstückträger 4 zumindest zwei Werkstücke 5 gleichzeitig aufgespannt sind und mit den weitestgehend ortsfest in einem Bearbeitungskopf angeordneten Bearbeitungsspindeln gleichzeitig an mehreren Positionen bearbeitet werden. Dabei ist es von besonderer Bedeutung, dass die einzelnen Werkstücke 5 in Relation zueinander und in Relation zu den Werkzeugspindeln korrekt ausgerichtet sind. Ohne das gegenständliche Positionsausgleichssystem müssen beide Werkstücke 5 exakt zueinander und zusätzlich zu den Bearbeitungsspindeln ausgerichtet werden, was den Rüstaufwand und die Genauigkeit des Transferzentrums deutlich steigert. Der Aufwand für die Positionierung der Werkstücke steigt überproportional mit der Anzahl der gleichzeitig aufgespannten Werkstücken bzw. der gleichzeitig durchgeführten Bearbeitungsschritte. Hier ist es also von besonderem Vorteil, wenn die exakte Feinpositionierung der Werkstücke durch ein automatisches System durchgeführt werden kann. Weiter kann das Positionsausgleichssystem zur Kompensation eventueller temperaturbedingter Verlagerungen der Maschinenkomponenten herangezogen werden.

Da die Druckelemente 16 bevorzugt als hydraulische Druckdosen ausgebildet sind, ist gemäß einer Weiterbildung vorgesehen, dass im Werkstückträger 4 Druckleitungen 17 vorgesehen sind, welche über Anschlüsse, bevorzugt in der Auflagefläche 7, mit den Druckelementen 16 verbunden werden können.

Fig. 1 a zeigt eine Prinzip-Darstellung der Aufnahme des Flanschträgers 14. In Fig. 1 b ist eine mögliche Ausführung des Werkstückträgers 4 dargestellt. Fig. 1 c zeigt eine mögliche Detailausführung der Spannvorrichtungen 6, welche in dieser Ausführung Spannbügel 18 aufweisen. Die Spannbügel 18 ist je mittels eines Spannelements 19 am Spannnest 34 befestigt, wobei durch die geometrische Ausgestaltung des Spannbügels 18, das jeweilige Werkstück 5 fest auf das diesbezügliche Spannnest 34 gedrückt wird. Im dargestellten Fall nach Fig. 1 a und 1 b ist jeweils zwischen Spannbügel 18 und Werkstück 5 ein Druckelement 16 angeordnet. Die Druckelemente 16 sind daher in der jeweiligen Spannvorrichtung 6 integriert angeordnet. Bei Druckbeaufschlagung kommt es zu Längenänderung 20, was zu einem Versatz des Werkstückes 5 in der Spannvorrichtung 6 führt. Durch Anordnung von zumindest diesen beiden Druckelementen 16, deren Wirkrichtungen einen Winkel zueinander einschließen, wie dies beispielsweise in Fig. 1 a dargestellt ist, kann ein Positionsausgleich an jedem Werkstück 5 durchgeführt werden, auch nachdem dieses am Werkstückträger 4 aufgespannt bzw. in der jeweiligen Spannvorrichtungen 6 eingespannt wurden. Das eingespannte Werkstück 5 kann somit zweiachsig bewegt werden.

Nach Fig. 1 d und Fig. 1 e sind zusätzlich oder alternativ zu Fig. 1b und Fig. 1 c Druckelemente 16 zwischen den Spannvorrichtung 6 und dem Werkstückträger 4 angeordnet. Und zwar greift je ein Druckelement 16 an je ein Spannnest 34 einer Spannvorrichtung 6 an, wie dies der Fig. 1 d zu entnehmen ist. Das jeweilige Spannnest 34 wird über einen Bügel 35 am Werkstückträger 4 befestigt. Zwischen Bügel 35 und dem Spannnest 34 ist das Druckelement 16 vorgesehen. Damit kann konstruktiv vereinfacht mit Hilfe von zwei Druckelementen 16 eine zweiachsige Beweglichkeit zwischen den beiden Spannvorrichtungen 6 bzw. Werkstücken 5 ermöglicht werden. Mit einem gegenseitigen Positionsausgleich der beiden Werkstücke 5 am Werkstückträgers 4 sind diese nun parallel vom Transferzentrum 33 fertigungsgenau bearbeitbar. Im Allgemeinen wird erwähnt, dass auch andere Befestigungsmöglichkeiten, als durch den Spannbügel 18 und Bügel 35 nach den Figuren 1a bis 1 e dargestellt, vorstellbar sind.

Natürlich ist denkbar zwischen den Spannvorrichtungen 6 bzw. den Spannnestern 34 und dem Werkstückträger 4 auch mehr als ein Druckelement 16 anzuordnen. Solch eine Konstruktion ist beispielsweise nach der Fig. 1 f dargestellt. Beispielsweise kann so die Variabilität im Positionsausgleich der Werkstücke 5 erhöht werden, in dem nicht nur eine lineare Lageveränderung 20 sondern auch eine rotatorische Lageveränderung 36 am Spannnest 34 ermöglicht. Wie zur unteren Spannvorrichtung 6 dargestellt, reichen hierzu drei Druckelemente 16 aus, vorzugsweise sind jedoch 4 Druckelemente 16 vorgesehen, wie dies gemäß der oberen Spannvorrichtung 6 gezeigt wird. Die Druckelemente 16 greifen mit gleicher Wirkrichtung 32 an die jeweiligen Spannvorrichtungen 6 an, was diesen je eine andere Wirkrichtung 32 zugeordnet. Damit ist ein Ausgleich einer Abweichung zwischen Ist- zur Sollposition der beiden Werkstücke 4 relativ zueinander einfach möglich, welche Konstruktion zudem äußerst mechanisch belastbar ist.

Zudem ist der Fig. 1f zu entnehmen, dass die Spannvorrichtungen 6 über die Druckelemente am Werkstückträger 4 bewegbar gegenüber dem Werkstückträger 4 befestigt bzw. am Werkstückträger 4 aufgehängt werden. Dies wird für eine besonders genaue Feinverstellung der Spannnester 34 genützt.

Zur Ermittlung des notwendigen Korrekturversatzes kann vorgesehen sein, dass am Werkstückträger 4 eine Positionserfassungsvorrichtung 21 vorhanden ist, welche die aktuelle Ist-Position des Werkstückes 5 in Relation zum Werkstückträger 4 ermittelt, woraufhin eine Steuerungseinrichtung die durchzuführende Korrektur und die dafür erforderliche Druckbeaufschlagung der Druckelemente 16 ermittelt. Die Positionserfassungsvorrichtung 21 kann beispielsweise kontaktbehaftet durch Taststifte, Anschlagkontakte oder ähnlichem gebildet sein, es ist jedoch auch eine kontaktlose Erfassung möglich, beispielsweise durch optisch, akustisch, induktiv, kapazitiv wirkende Distanzmessvorrichtungen oder dergleichen.

Die nicht dargestellte Steuerungsvorrichtung umfasst neben einem Modul zur Positionsauswertung und Ermittlung einer Korrekturinformation, Druckregelventile, um bevorzugt jedes einzelne, oder ggf. Gruppen von Druckelementen, mit einem individuellen Druck zu beaufschlagen.

## Patentansprüche

1. Transferzentrum zur spanenden Bearbeitung von Werkstücken (5) mit einem Maschinenrahmen (2), mit mehreren, bevorzugt ortsfest, im Maschinenrahmen (2), insbesondere in einem Bearbeitungskopf (27), angeordneten Bearbeitungsspindeln (28), mit einem Werkstückträger (4), an dem die zu bearbeitenden Werkstücke (5) mittels je einer Spannvorrichtung (6) angeordnet sind, mit einem im Maschinenrahmen (2) angeordneten Werkstückmanipulator (3), an dem der Werkstückträger (4) angeflanscht ist und der mittels Antriebsmittel in zumindest einer Raumrichtung in Relation zum Maschinenrahmen (2) beweglich ist, und mit einem zum Ausgleich einer Abweichung zwischen Ist- zur Sollposition der Werkstücke (5) vorgesehenen Positionsausgleichssystem (1) mit zwischen den Werkstücken (5) und dem Maschinenrahmen (2) angeordneten Druckelementen (16), **dadurch gekennzeichnet, dass** das Positionsausgleichssystem (1) zumindest zwei, zwischen den Werkstücken (5) und dem Maschinenrahmen (2) angeordnete Druckelemente (16) aufweist, deren Wirkrichtungen (32) einen Winkel zueinander zum Positionsausgleich der Werkstücke (5) zueinander für eine genaue parallele Bearbeitung im Transferzentrum einschließen.

2. Transferzentrum nach Anspruch 1, **dadurch gekennzeichnet, dass** das Druckelement (16) durch ein hydraulisches Druckelement, insbesondere Druckdose, gebildet ist.

3. Transferzentrum nach Anspruch 1 oder 2, **dadurch gekennzeichnet, dass** die Wirkrichtungen (32) der beiden Druckelemente (16) in einer Ebene liegen und/oder der Winkel zwischen den Wirkrichtungen (32) 90 Grad beträgt.

4. Transferzentrum nach Anspruch 1, 2 oder 3, **dadurch gekennzeichnet, dass** die Druckelemente (16) zwischen der Spannvorrichtung (6) oder den Spannvorrichtungen (6) und dem Werkstückträger (4) angeordnet sind.

5. Transferzentrum nach Anspruch 4, **dadurch gekennzeichnet, dass** mindestens zwei Druckelemente (16) mit einem Winkel zwischen deren Wirkrichtungen (32) je an ein Spannnest (34) einer Spannvorrichtungen (6) angreifen.

6. Transferzentrum nach Anspruch 4, **dadurch gekennzeichnet, dass** an je ein Spannnest (34) einer Spannvorrichtung (6) ein Druckelement (16) bzw. mehrere Druckelemente (16) mit gleicher Wirkrichtung (32) angreift bzw. angreifen.

7. Transferzentrum nach Anspruch 6, **dadurch gekennzeichnet, dass** zum Ausgleich einer Abweichung zwischen Ist- zur Sollposition zweier Werkstücke (5) relativ zueinander deren Spannvorrichtung (6) je eine andere Wirkrichtung (32) zugeordnet ist.

8. Transferzentrum nach einem der Ansprüche 4 bis 7, **dadurch gekennzeichnet, dass** die Spannvorrichtung (6) über die Druckelemente am Werkstückträger (4) befestigt ist.

9. Transferzentrum nach einem der Ansprüche 1 bis 8, **dadurch gekennzeichnet, dass** mindestens zwei Druckelemente (16) in einer Spannvorrichtung (6) integriert angeordnet sind.

10. Transferzentrum nach einem der Ansprüche 1 bis 9, **dadurch gekennzeichnet, dass** auf selber Wirkrichtung, zwei Druckelemente (16) gegenüberliegend angeordnet sind, wobei sich das Werkstück (5) zwischen den beiden Druckelementen (16) befindet.

11. Transferzentrum nach Anspruch 10, **dadurch gekennzeichnet, dass** zusätzlich mindestens ein Druckelement (16) mit einer zu den anderen beiden Druckelementen (16) linear unabhängigen, insbesondere parallelen, Wirkrichtung (32) vorgesehen ist.

## Claims

1. A transfer center for machining workpieces (5) having a machine frame (2), having a plurality of preferably stationary machining spindles (28) arranged in the machine frame (2), more particularly in a machining head (27), having a workpiece carrier (4) an which the workpieces (5) to be machined are arranged by means of a respective clamping device (6), and having a workpiece manipulator (3) arranged in the machine frame (2), onto which workpiece manipulator the workpiece carrier (4) is flange-mounted and which is movable by drive means in at least one spatial direction in relation to the machine frame (2), and having a position compensation system (1) in order to compensate a deviation between the actual position and the desired position of the workpieces (5) with between the workpieces (5) and the machine frame (2) situated pressure elements (16),
**characterized in that**, the position compensation system (1) comprises at least two pressure elements (16) situated between the workpieces (5) and the machine frame (2), whose operating directions (32) enclose an angle with each other for position compensation of the workpieces (5) to each other for precise parallel machining in the transfer center.

2. Transfer center according to claim 1, **characterized in that** the pressure element (16) is composed of a hydraulic pressure element, more particularly of a pressure capsule.

3. Transfer center according to claim 1 or 2, **characterized in that** the operating directions (32) of the two pressure elements (16) lie in a plane and/or the angle between the operating directions (32) is a 90 degree angle.

4. Transfer center according to claim 1, 2, or 3, **characterized in that** the pressure elements (16) are situated between the clamping device (6) or clamping devices (6) and the workpiece carrier (4).

5. Transfer center according to claim 4, **characterized in that** at least two pressure elements (16) with an angle between their operating directions (32) each engage a clamping cradle (34) of a clamping devices (6).

6. Transfer center according to claim 4, **characterized in that** each clamping cradle (34) of a clamping device (6) is engaged by a pressure element (16) or by several pressure elements (16) with the same operating direction (32).

7. Transfer center according to claim 6, **characterized in that**, in order to compensate for a deviation between the actual position and the desired position of two workpieces (5) relative to each other, each of their clamping devices (6) is assigned a different operating direction (32).

8. Transfer center according to one of claims 4 through 7, **characterized in that** the clamping device (6) is fastened to the workpiece carrier (4) by means of the pressure elements.

9. Transfer center according to one of claims 1 through 8, **characterized in that** at least two pressure elements (16) are integrated into a clamping device (6).

10. Transfer center according to one of claims 1 through 9, **characterized in that** two pressure elements (16) are arranged opposite each other in the same operating direction and the workpiece (5) is situated between the two pressure elements (16).

11. Transfer center according to claim 10, **characterized in that** at least one pressure element (16) is additionally provided with an in particular parallel operating direction (32) that is linearly independent of the other two pressure elements (16).

## Revendications

1. Centre de transfert pour l'usinage avec enlèvement de matière de pièces d'oeuvre (5), avec un bâti de machine (2), avec plusieurs broches d'usinage (28) disposées, de préférence de façon stationnaire, dans le bâti de machine (2), en particulier dans une tête d'usinage (27), avec un porte-pièce (4) sur lequel les pièces d'oeuvre (5) à usiner sont disposées au moyen chacune d'un dispositif de serrage (6), avec un manipulateur de pièces (3) disposé dans le bâti de machine (2), auquel le porte-pièce (4) est assemblé par une bride et qui est mobile au moyen de moyens d'entraînement dans au moins une direction de l'espace par rapport au bâti de machine (2), et avec un système d'ajustement de la position (1) prévu pour compenser un écart entre la position réelle et la position de consigne des pièces d'oeuvre (5) et possédant des éléments de pression (16) disposés entre les pièces d'oeuvre (5) et le bâti de machine (2), **caractérisé en ce que** le système d'ajustement de la position (1) comprend au moins deux éléments de pression (16) disposés entre les pièces d'oeuvre (5) et le bâti de machine (2), dont les sens d'action (32) forment un angle l'un par rapport à l'autre pour ajuster la position des pièces d'oeuvre (5) les unes par rapport aux autres en vue d'un usinage en parallèle rapide dans le centre de transfert.

2. Centre de transfert selon la revendication 1, **caractérisé en ce que** l'élément de pression (16) est formé par un élément de pression hydraulique, en particulier une capsule sous pression.

3. Centre de transfert selon la revendication 1 ou 2, **caractérisé en ce que** les sens d'action (32) des deux éléments de pression (16) se trouvent dans le même plan et/ou l'angle entre les sens d'action (32) est de 90 degrés.

4. Centre de transfert selon la revendication 1, 2 ou 3, **caractérisé en ce que** les éléments de pression (16) sont disposés entre le dispositif de serrage (6) ou les dispositifs de serrage (6) et le porte-pièce (4).

5. Centre de transfert selon la revendication 4, **caractérisé en ce qu'**au moins deux éléments de pression (16) dont les sens d'action (32) forment un angle se mettent en prise chacun sur une cage de serrage (34) d'un dispositif de serrage (6).

6. Centre de transfert selon la revendication 4, **caractérisé en ce qu'**un élément de pression (16) ou plusieurs éléments de pression (16) ayant le même sens d'action (32) se mettent en prise chacun sur une cage de serrage (34) d'un dispositif de serrage (6).

7. Centre de transfert selon la revendication 6, **caractérisé en ce qu'**afin de compenser un écart entre la position réelle et la position de consigne de deux pièces d'oeuvre (5) l'une par rapport à l'autre, un sens d'action (32) différent est assigné au dispositif de serrage (6) de chacune.

8. Centre de transfert selon l'une des revendications 4 à 7, **caractérisé en ce que** le dispositif de serrage (6) est fixé au porte-pièce (4) à l'aide des éléments de pression.

9. Centre de transfert selon l'une des revendications 1 à 8, **caractérisé en ce qu'**au moins deux éléments de pression (16) sont intégrés dans un dispositif de serrage (6).

10. Centre de transfert selon l'une des revendications 1 à 9, **caractérisé en ce que** deux éléments de pression (16) ayant un même sens d'action sont disposés l'un en face de l'autre, la pièce d'oeuvre (5) se trouvant entre les deux éléments de pression (16).

11. Centre de transfert selon la revendication 10, **caractérisé en ce qu'**il est prévu en outre au moins un élément de pression (16) ayant un sens d'action (32) indépendant de façon linéaire des autres éléments de pression (16), en particulier parallèle.
